# EUROPÄISCHE PATENTSCHRIFT

(11) **EP 2 877 897 B1**
(45) Veröffentlichungstag und Bekanntmachung des Hinweises auf die Patenterteilung: **02.01.2019**
(21) Anmeldenummer: 13755940.7
(22) Anmeldetag: 15.07.2013
(51) Int. Cl.: G03B 35/08, H04N 5/225

(54) **VERFAHREN ZUR AUSRICHTUNG ZWEIER BILDAUFNAHMEELEMENTE EINES STEREOKAMERASYSTEMS**
METHOD FOR ALIGNING TWO IMAGE RECORDING ELEMENTS OF A STEREO CAMERA SYSTEM
PROCÉDÉ POUR ALIGNER DEUX ÉLÉMENTS D'ACQUISITION D'IMAGE D'UN SYSTÈME DE PRISE DE VUE STÉRÉOSCOPIQUE

(30) Priorität: 27.07.2012 DE 102012106834
(43) Veröffentlichungstag der Anmeldung: 03.06.2015
(73) Patentinhaber: Conti Temic Microelectronic GmbH, 90411 Nürnberg (DE)
(72) Erfinder: MÜLLER, Gerhard, 88339 Bad Waldsee (DE)
(86) Internationale Anmeldenummer: PCT/DE2013/200049
(87) Internationale Veröffentlichungsnummer: WO 2014/015867

(56) Entgegenhaltungen:
- WO-A1-2006/052024
- WO-A1-2008/012173
- WO-A1-2009/057436
- WO-A1-2011/142219
- JP-A- 2009 265 412
- US-A1- 2008 117 316

## Beschreibung

Die Erfindung betrifft ein Verfahren zur Ausrichtung wenigstens zweier Bildaufnahmeelemente zweier Kameramodule eines Stereokamerasystems, insbesondere bezüglich ihres Rollwinkels zueinander, sowie ein Stereokamerasystem, dessen Kameramodule bzw. dessen Bildaufnahmeelemente nach einem solchen Verfahren zueinander ausgerichtet sind.

Fahrerassistenzsysteme in Kraftfahrzeugen verwenden häufig ein Kamerasystem zur Erkennung von Objekten im Umfeld des Fahrzeugs, beispielsweise in einem in Fahrtrichtung vorausliegenden Umgebungsbereich. Derartige Kamerasysteme sind in der Regel im Fahrzeuginnenraum hinter der Windschutzscheibe angeordnet und blicken in Fahrtrichtung durch die Scheibe hindurch.

Einige Fahrerassistenzsysteme, wie etwa Systeme zur Vermeidung von Unfällen, z.B. (Not-)Bremsassistenten, oder Systeme mit einer Längs- bzw. Querführungsunterstützung, z.B. Geschwindigkeitsregelungssysteme oder Fahrspurassistenten, benötigen möglichst genaue Informationen über das Fahrzeugumfeld. Dabei kommt der Erfassung von Objekten sowie der Bestimmung der Entfernung zu diesen Objekten eine wichtige Rolle zu. Zur Bestimmung der Objektentfernung werden derzeit in erster Linie Strahlsensoren verwendet, beispielsweise Ultraschall-, Radar- oder Lidar-Systeme. Doch auch Kameras werden bereits zur Bestimmung von Objektentfernungen eingesetzt.

Bei der Bestimmung von Objektentfernungen mittels Kameras werden derzeit sogenannte Stereokamerasysteme eingesetzt. Diese bestehen aus zwei in der Regel identischen Kameramodulen bzw. Monokameras, die als separate optische Systeme aufgebaut sind, d.h. mit jeweils einem Bildaufnahmeelement und einem Abbildungssystem (z.B. Objektiv). Die beiden Kameramodule werden mit ihren optischen Achsen meist parallel zueinander ausgerichtet und lateral versetzt nebeneinander hinter der Windschutzscheibe angeordnet, d.h. auf einer Linie parallel zur Fahrzeugquerachse nebeneinander versetzt. Die laterale Distanz zwischen den Kameramodulen wird als Baseline bezeichnet. Die Pixelkoordinaten der Projektion eines Bildpunktes eines Objektes unterscheiden sich in den erfassten Bildern der beiden Kameramodule. Die Differenz zwischen den Koordinatenpaaren, d.h. der Versatz des Bildpunktes in den Bildern, hängt dabei von der Entfernung des Objektes zur Kamera ab. Bei bekannter Baseline lässt sich aus dem Versatz des Bildpunktes mittels Trigonometrie auf bekannte Weise die Entfernung zum Objekt berechnen. Dieses Prinzip zur Ermittlung bzw. Berechnung von Objektentfernungen mittels eines Stereokamerasystems wird auch als Stereoprinzip bezeichnet.

Die DE 10 2010 023 591 A1 zeigt ein Stereokamerasystem, das zur Montage an der Windschutzscheibe eines Fahrzeugs und zur Nutzung für ein Fahrerassistenzsystem vorgesehen ist. Das System ist als eine mechanisch gekoppelte Einheit von zwei Kameramodulen ausgebildet. Jedes Kameramodul des Systems umfasst ein Bildaufnahmeelement, beispielsweise einen CMOS- oder CCD-Bildchip, und eine Optik, insbesondere ein Objektiv. Das System weist außerdem eine Elektronik auf, die einen Speicher mit einer Software zum Auswerten der von den Bildaufnahmeelementen der Kameramodule erzeugten digitalen Bilddaten aufweist.

Die JP 2009265412 A offenbart eine Stereokameraeinheit. Hierbei werden eine Bodenfläche, eine rechte Seitenwand und eine untere Seitenwand einer Sensorspeichereinheit, die in einem Kameragehäuse ausgebildet sind, während es in einem vorbestimmten Zustand positioniert ist, als Positionierungsreferenzflächen für die Rückseite, die rechte Seite bzw. die Unterseite des Bildsensors eingestellt. Ein von der Rückseite des Bildsensors ausgehender Leitungsdraht ragt durch das Kameragehäuse zur Rückseite des Kameragehäuses.

Wie vorangehend beschrieben, wird zur Bestimmung von Entfernungsinformationen mittels eines solchen Stereokamerasystems nach gleichen Bildinhalten, insbesondere nach gleichen Bildpunkten, in den beiden Bildern der einzelnen Kameramodule gesucht und deren relativer Versatz nach dem Stereoprinzip ausgewertet. Um hier möglichst gute Ergebnisse zu erhalten und den Rechenaufwand möglichst gering zu halten, müssen die beiden Kameramodule bzw. die beiden Bildaufnahmeelemente der Kameramodule möglichst genau gegeneinander ausgerichtet werden, insbesondere bezüglich ihres Rollwinkels zueinander, d.h. bezüglich der Verdrehung der Bildaufnahmeelemente um deren optische Achsen gegeneinander. Idealerweise sind die Pixelspalten der beiden Bildaufnahmeelemente eines Stereokamerasystems parallel zueinander ausgerichtet, d.h. die Bildaufnahmeelemente der Kameramodule haben keinen Rollwinkel bzw. keinen Rollwinkelunterschied zueinander. Um dies zu erreichen, erfolgt bei der Fertigung von Stereokamerasystemen derzeit noch jedes Mal eine aktive Justage der Kameramodule bzw. der Bildaufnahmeelemente. Bei der aktiven Justage werden während der Ausrichtung der Kameramodule kontinuierlich Bilder aus den Modulen ausgelesen. Anhand der ausgelesenen Bilder können die Kameramodule zueinander ausgerichtet werden.

Die derzeit erforderliche aktive Justage der Kameramodule eines Stereokamerasystems ist sehr aufwändig und kostenintensiv. Ein Verzicht auf die aktive Justage, d.h. eine rein mechanische Justage mit hinreichend kleinen Toleranzen, betreffend insbesondere die Rollwinkeltoleranz der Bildaufnahmeelemente, scheitert derzeit jedoch insbesondere an langen Toleranzketten, die sowohl innerhalb des gesamten Stereokamerasystems, aber auch innerhalb einzelner Komponenten des Systems existieren, beispielsweise innerhalb der einzelnen Kameramodule.

Bei den bekannten Stereokamerasystemen umfassen die Kameramodule in der Regel jeweils eine Trägerplatte, z.B. eine Leiterplatte, auf denen ein Bildaufnahmeelement angeordnet ist. Über dem Bildaufnahmeelement befindet sich meist die Optik, z.B. ein Objektiv. Dieses wird beispielsweise mittels eines Objektivhalters gehalten und kann ebenfalls direkt auf der Trägerplatte angeordnet sein. Die Kameramodule werden separat gefertigt und anschließend im Stereokamerasystem angeordnet, insbesondere in einem gemeinsamen Gehäuse des Stereokamerasystems. Die folgenden Toleranzen, betreffend den Rollwinkel der Bildaufnahmeelemente eines Stereokamerasystems, müssen somit jedes Mal insbesondere berücksichtigt werden:
- Rollwinkeltoleranz innerhalb des Bildaufnahmeelements selbst, d.h. insbesondere zwischen photosensitivem Halbleiterchip (Die) und Chipgehäuse (Die-Gehäuse)
- Rollwinkeltoleranz zwischen Bildaufnahmeelement und Trägerplatte
- Toleranz zwischen der Trägerplatte und dem Objektiv, insbesondere wenn Merkmale (z.B. Markierungen) an den Objektiven der Kameramodule zur Rollwinkelausrichtung verwendet werden.
- Toleranz zwischen Objektiv und Objektivhalter
- Toleranz zwischen den Kameramodulen bzw. zwischen den Kameramodulen und dem Gehäuse des Stereokamerasystems
Die Toleranzen innerhalb der Kameramodule des Stereokamerasystems müssen jeweils für beide Kameramodule berücksichtigt werden, d.h. diese Toleranzen fallen doppelt an, was die Toleranzkette für das gesamte Stereokamerasystem insgesamt verlängert.
Der Erfindung liegt die Aufgabe zugrunde, eine Lösung für ein Stereokamerasystem anzugeben, die eine möglichst einfache und kostengünstige Fertigung eines Stereokamerasystems ermöglicht, insbesondere eine möglichst einfache Rollwinkelausrichtung der Kameramodule bzw. der Bildaufnahmeelemente des Stereokamerasystem. Es soll dabei bevorzugt auf eine aktive Justage der Kameramodule bzw. der Bildaufnahmeelemente des Stereokamerasystems, insbesondere auf eine aktive Rollwinkeljustage, verzichtet werden können.
Diese Aufgabe wird durch ein Verfahren mit den Merkmalen nach Anspruch 1 sowie durch ein Stereokamerasystem mit den Merkmalen nach Anspruch 8 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.
Ein wesentlicher Gedanke der Erfindung besteht darin, geeignete Maßnahmen zu ergreifen, durch welche eine Verringerung der Toleranzen im Stereokamerasystem sowie insbesondere eine Verringerung der Toleranzen bei der Ausrichtung der Kameramodule zueinander erreicht wird. Erfindungsgemäß wird dies durch im Wesentlichen zwei Maßnahmen erreicht.
Eine erste vorgeschlagene Maßnahme besteht darin, ungehäuste Bildaufnahmeelemente für das Stereokamerasystem bzw. für die Kameramodule zu verwenden, d.h. insbesondere sogenannte Bare-Die-Bildchips. Diese weisen selbst kein eigenes Chipgehäuse auf. Dadurch entfallen die Rollwinkeltoleranzen innerhalb der Bildaufnahmeelemente, d.h. die Toleranzen zwischen dem photosensitiven Halbleiterchip (Die) und dem Chipgehäuse (Die-Gehäuse).

Eine weitere vorgeschlagene Maßnahme besteht darin, eine definierte Referenzaußenkante an den Trägerplatten der Kameramodule vorzusehen. Bei den Referenzaußenkanten kann es sich insbesondere um wenigstens eine gerade Außenkante der Trägerplatten handelt. Wesentlich ist dabei zum Einen, dass die Bildaufnahmeelemente bezüglich ihres Rollwinkels möglichst genau zu diesen Referenzaußenkanten ausgerichtet werden, insbesondere mit ihren Pixelzeilen und/oder Pixelspalten parallel zu den Referenzaußenkanten. Das kann beispielsweise, insbesondere wenn ungehäuste Bildaufnahmeelemente verwendet werden, mittels einer oder mehrerer Anschlagskanten, die auf den Trägerplatten angeordnet und parallel zu den Referenzaußenkanten ausgerichtet sind, erfolgen. Wesentlich ist dabei zum Anderen, dass die Kameramodule selbst mittels der Referenzaußenkanten zueinander ausgerichtet werden. Die Ausrichtung der Kameramodule erfolgt vorzugsweise durch Positionierung der Referenzaußenkanten der Trägerplatten der Kameramodule gegen eine gemeinsame Referenzkante, beispielsweise gegen die selbe Fläche bzw. Referenzfläche, einer Tragvorrichtung, die innerhalb des Stereokamerasystems angeordnet ist und zur Aufnahme der Kameramodule dient.

Ein wesentlicher Vorteil der Erfindung besteht darin, dass die Toleranzkette des gesamten Stereokamerasystems, insbesondere die Toleranzkette betreffend die Rollwinkeltoleranz zwischen den Bildaufnahmeelementen des Stereokamerasystems, durch die oben beschrieben Maßnahmen deutlich reduziert bzw. verkürzt werden kann. Bei Verwendung sowohl von ungehäusten Bildaufnahmeelementen sowie von Referenzaußenkanten, zur Ausrichtung der Bildaufnahmeelemente auf den Trägerplatten und zur Ausrichtung der Kameramodule zueinander, kann die einleitend angeführte Toleranzkette zwischen den Bildaufnahmeelemente eines Stereokamerasystems vorzugsweise auf lediglich zwei verbleibende Toleranzen reduziert werden:
- Rollwinkeltoleranz der Bildaufnahmeelemente zu den Referenzaußenkanten.
- Toleranz in der Tragvorrichtung zur Aufnahme der Kameramodule im Stereokamerasystem.

Das erfindungsgemäße Verfahren dient zur Ausrichtung wenigstens zweier Bildaufnahmeelemente zweier Kameramodule, insbesondere bezüglich ihres Rollwinkels zueinander bzw. gegeneinander. Bei den Kameramodulen handelt es sich vorzugsweise um zwei Kameramodule eines Stereokamerasystems, bei dem die Kameramodule mit derselben Blickrichtung lateral versetzt sowie mit ihren optischen Achsen parallel zueinander angeordnet werden. Das erfindungsgemäße Verfahren umfasst dabei im Wesentlichen die folgenden Schritte:
- Anordnung der Bildaufnahmeelemente auf Trägerplatten der Kameramodule, wobei die Bildaufnahmeelemente jeweils zu wenigstens einer Referenzaußenkante der jeweiligen Trägerplatte ausgerichtet werden, insbesondere bezüglich ihres Rollwinkels;
- Anordnung der Kameramodule innerhalb des Stereokamerasystems, wobei die Referenzaußenkanten der Trägerplatten gegen eine gemeinsame Referenzkante oder gegen mehrere zueinander ausgerichtete Referenzkanten positioniert werden.
Bei dem Rollwinkel der Bildaufnahmeelemente handelt es sich insbesondere um die Verdrehung der Bildaufnahmeelemente um deren optische Achse. Bei der Ausrichtung des Rollwinkels zweier Bildaufnahmeelemente zueinander sollen vorzugsweise die Rollwinkel der beiden Bildaufnahmeelemente derart gegeneinander ausgerichtet werden, dass die Bildaufnahmeelemente der Kameramodule keinen Rollwinkel bzw. keinen Rollwinkelunterschied zueinander aufweisen, d.h. idealerweise sind die Pixelspalten bzw. die Pixelzeilen der Bildaufnahmeelemente parallel zueinander ausgerichtet.

Die Trägerplatten der Kameramodule, auf denen die Bildaufnahmeelemente angeordnet und ausgerichtet werden, können beispielsweise aus Metall, Keramik oder aus Epoxy-Material gefertigt sein. Bei den Trägerplatten kann es sich weiterhin um Leiterplatten mit integrierten Schaltkreise bzw. Leiterbahnen oder auch um rein passive Komponenten handeln, beispielsweise um Grundplatten ohne elektrisch leitende Funktion bzw. ohne elektrische Komponenten (Schaltkreise, Leiterbahnen, etc.), d.h. die lediglich zur Aufnahme der Bildaufnahmeelemente und optional weiterer Komponenten dienen.

Gemäß einer bevorzugten Ausführung des erfindungsgemäßen Verfahrens werden bei der Ausrichtung der Bildaufnahmeelemente jeweils zu wenigstens einer Referenzaußenkante der Trägerplatten, die Bildaufnahmeelemente jeweils gegen eine oder mehrere Anschlagskanten, mit denen die Trägerplatten ausgebildet sind, positioniert. Bei den Anschlagskanten handelt es sich dabei insbesondere um eine oder mehrere auf den Trägerplatten ausgebildete Anschlagskanten, die parallel zu den Referenzaußenkanten der Trägerplatten ausgebildet bzw. ausgerichtet sind. Die Bildaufnahmeelemente können somit, bei Anordnung auf den Trägerplatten und zur Ausrichtung zu den Referenzaußenkanten der Trägerplatten, gegen die Anschlagskanten positioniert werden. Hierdurch kann eine einfache und genaue Ausrichtung der Pixelzeilen und/oder Pixelspalten der Bildaufnahmeelemente zu Referenzkanten erreicht werden, insbesondere eine parallele Ausrichtung, wodurch die Rollwinkeltoleranz zwischen dem jeweiligen Bildaufnahmeelemente und der jeweiligen Trägerplatte erheblich reduziert werden kann. Alternativ zur Positionierung des Bildaufnahmeelements gegen eine oder mehrere Anschlagskanten können auch andere Positionierverfahren verwendet werden, um die Bildaufnahmeelement auf den Trägerplatten gegenüber den Referenzaußenkanten auszurichten. Es kann beispielsweise auch eine optische Vermessung, insbesondere mit einer entsprechenden Mikropositionierung, erfolgen.

Gemäß einer weiteren bevorzugten Ausführung des erfindungsgemäßen Verfahrens erfolgt die Positionierung der Bildaufnahmeelemente gegen die eine oder mehrere Anschlagskanten der Trägerplatten mittels eines oder mehrerer federnder Elemente, mit welchen die Trägerplatten ausgebildet sind und welche die Bildaufnahmeelemente bei deren Anordnung auf der Trägerplatte mit einer Federkraft gegen die Anschlagskanten beaufschlagen.

Gemäß einer besonderen Ausführung des erfindungsgemäßen Verfahrens werden bei der Ausrichtung der Bildaufnahmeelemente, jeweils zu wenigstens einer Referenzaußenkante der Trägerplatten, die Bildaufnahmeelemente jeweils gegen eine oder mehrere Anschlagskanten einer Hilfsvorrichtung positioniert. Bei der Hilfsvorrichtung handelt es sich dabei vorzugsweise um eine Vorrichtung, die zur Anordnung und Ausrichtung der Bildaufnahmeelemente jeweils auf den Trägerplatten angeordnet und nach der Anordnung und Ausrichtung der Bildaufnahmeelemente wieder entfernt wird. Die Hilfsvorrichtung kann beispielsweise als Montagerahmen ausgebildet sein, der sowohl mit einem oder mehreren definierte Anschlägen ausgebildet, mittels derer der Rahmen eindeutig gegen die Referenzaußenkanten der Trägerplatten positionierbar ist, sowie der eine oder mehrere Anschlagskanten aufweist, zur definierten Positionierung des Bildaufnahmeelements gegen diese Anschlagskanten und damit gegenüber der wenigstens einen Referenzaußenkante der jeweiligen Trägerplatte.

Gemäß einer vorteilhaften Ausführung des erfindungsgemäßen Verfahrens handelt es sich bei den Bildaufnahmeelementen der Kameramodule um ungehäuste Bildaufnahmeelemente, insbesondere um sogenannte Bare-Dies bzw. einen Bare-Die-Bildchips. Ein wesentlicher Vorteil bei der Verwendung und Anordnung von ungehäusten Bildaufnahmeelementen auf den Trägerplatten, insbesondere im Rahmen des erfindungsgemäßen Verfahrens, mit einer definierten Ausrichtung der Bildaufnahmeelemente gegenüber wenigstens einer Referenzaußenkante der Trägerplatten, besteht darin, dass die Bildaufnahmeelemente sehr genau bezüglich ihres Rollwinkels gegen die Referenzaußenkanten ausgerichtet werden können, da die ungehäusten Bildaufnahmeelemente selbst nur sehr geringe Rollwinkeltoleranzen aufweisen. Dadurch können die Pixelzeilen bzw. Pixelspalten der Bildaufnahmeelemente sehr genau, insbesondere parallel, zu den Referenzaußenkanten der Trägerplatten ausgerichtet werden.

Wenn es sich bei den Bildaufnahmeelementen um ungehäuste Bildaufnahmeelemente handelt, können diese, bei der Anordnung auf den Trägerplatten, auf einer Vorderseite der Trägerplatten angeordnet werden und, insbesondere mittels Drahtbonden sowie bevorzugt durch Aussparungen in den Trägerplatten hindurch, mit Leiterplatten kontaktiert werden. Die Leiterplatten sind in dem Falle vorzugsweise auf einer Rückseite der Trägerplatten angeordnet.

Gemäß einer weiteren vorteilhaften Ausführung des erfindungsgemäßen Verfahrens, insbesondere wenn es sich bei den Bildaufnahmeelemente um ungehäuste Bildaufnahmeelemente und bei den Trägerplatten der Kameramodule um Leiterplatten handelt, können die Bildaufnahmeelemente auf den Trägerplatte angeordnet und mittels Drahtbonden mit den Trägerplatte kontaktiert werden.

Gemäß einer bevorzugten Ausführung des erfindungsgemäßen Verfahrens werden, bei der Anordnung der Kameramodule innerhalb des Stereokamerasystems, die Referenzaußenkanten der Trägerplatten gegen eine gemeinsame Referenzkante einer Tragvorrichtung positioniert. Bei der Tragvorrichtung handelt es sich bevorzugt um eine Vorrichtung innerhalb des Stereokamerasystems, die zur Aufnahme der beiden einzelnen Kameramodule dient. Die Tragvorrichtung kann beispielsweise als einfacher Balken ausgebildet sein, der als Aufnahme bzw. als laterale Querachse dient, entlang derer beiden Kameramodule versetzt nebeneinander angeordnet werden. Bei der Referenzkante der Tragvorrichtung handelt es sich vorzugsweise um eine gerade Referenzkante bzw. Referenzfläche der Tragvorrichtung. Zur Durchführung des erfindungsgemäßen Verfahrens kann die Tragvorrichtung mit einer Referenzkante, beispielsweise die obere Kante bzw. die obere Fläche eines Querträgers, ausgebildet sein, gegen die die Referenzaußenkanten der Trägerplatten der Kameramodule positioniert werden. Bevorzugt handelt es sich bei der Referenzkante um eine gemeinsame Referenzkante für beide Kameramodule, das heißt beide Kameramodule werden bevorzugt gegen dieselbe Referenzkante angeordnet bzw. positioniert, insbesondere eine sich über die gesamte laterale Distanz (Baseline), in der die Kameramodule zueinander angeordnet werden, erstreckende gemeinsame Kante der Tragvorrichtung. Die Kameramodule können auch gegen mehrere Referenzkanten einer Tragvorrichtung positioniert werden. Werden die beiden Kameramodule gegen mehrere getrennte Referenzkanten einer Tragvorrichtung des Stereokamerasystems positioniert, ist es wichtig, dass diese zueinander ausgerichtet sind, d.h. insbesondere in einer gemeinsamen Ebene liegen und/oder parallel zueinander ausgerichtet sind, damit die Kameramodule möglichst genau bezüglich ihres Rollwinkels zueinander ausgerichtet werden können.

Gemäß einer weiteren vorteilhaften Ausführung des erfindungsgemäßen Verfahrens werden die Referenzaußenkanten der Trägerplatten gegen eine oder mehrere Referenzkanten einer Hilfsvorrichtung positioniert. Bei der Hilfsvorrichtung handelt es sich bevorzugt um eine Vorrichtung, die zur Positionierung der Kameramodule in dem Stereokamerasystem angeordnet und nach der Positionierung der Kameramodule wieder entfernt wird. Bei der Hilfsvorrichtung kann es sich somit um eine Lehre bzw. ein Hilfswerkzeug handeln, das insbesondere eine gemeinsame Referenzkante oder mehrere getrennte zueinander ausgerichtete Referenzkanten aufweist, gegen die die Kameramodule bzw. die Referenzaußenkanten der Trägerplatten der Kameramodule bei deren Anordnung im Stereokamerasystem positioniert werden können. An die Referenzkanten der Hilfsvorrichtung sind im Wesentlichen dieselben Anforderungen zu stellen, wie an die Referenzkanten einer Tragvorrichtung zur Aufnahme der Kameramodule.

Das erfindungsgemäße Stereokamerasystem umfasst wenigstens zwei Kameramodule, die jeweils mit einer Trägerplatte und einem Bildaufnahmeelement ausgebildet sind. Die Kameramodule bzw. deren Bildaufnahmeelemente sind dabei bevorzugt mittels eines Verfahrens nach einem der vorangehend beschriebenen Ausführungen zueinander ausgerichtet, insbesondere bezüglich ihres Rollwinkels zueinander. Bei den Bildaufnahmeelementen der Kameramodule handelt es sich vorzugsweise um ungehäuste Bildaufnahmeelemente, d.h. um sogenannte Bare-Dies bzw. Bare-Die-Bildchips. Die Trägerplatten der Kameramodule sind weiterhin vorzugsweise mit wenigstens einer Referenzaußenkante ausgebildet, die gegen wenigstens eine gemeinsame Referenzkante einer Tragvorrichtung innerhalb des Stereokamerasystems positioniert sind.

Gemäß einer bevorzugten Ausgestaltung des erfindungsgemäßen Stereokamerasystems sind die Trägerplatten der Kameramodule jeweils mit einem oder mehreren Ausschnitten ausgebildet, insbesondere in Form von Aussparungen, beispielsweise an einer Außenkante oder an zwei gegenüberliegenden Außenkanten der Trägerplatten. Weiterhin ist vorzugsweise wenigstens eine Innenkante innerhalb der Ausschnitte gegen wenigstens eine Referenzkante einer Tragvorrichtung innerhalb des Stereokamerasystems positioniert, so dass die wenigstens eine Innenkante innerhalb der Ausschnitte als Referenzaußenkante im Rahmen des erfindungsgemäßen Verfahrens zur Anordnung und Ausrichtung der Kameramodule im Stereokamerasystem und damit zur Ausrichtung der Bildaufnahmeelemente, insbesondere bezüglich ihres Rollwinkels zueinander, dient.

Alternativ oder zusätzlich zu den Referenzaußenkanten der Trägerplatten, können erfindungsgemäß weitere konstruktive Referenzmerkmale an den Trägerplatten ausgebildet oder angeordnet sein, die zur Ausrichtung der Bildaufnahmeelemente dienen. Bevorzugt werden dabei jedes Mal sowohl die Bildaufnahmeelemente gegenüber diesen Merkmalen ausgerichtet, z.B. mittels Anschlagskanten auf den Trägerplatten, als auch die Trägerplatten, und damit auch die Kameramodule, selbst mittels der Referenzmerkmale zueinander ausgerichtet. Die Trägerplatten der Kameramodule können beispielsweise jeweils mit einer oder mehrerer Bohrungen ausgebildet sein, die als Referenzmerkmale der Trägerplatten dienen. Die Bohrungen können alternativ oder zusätzlich zu den Referenzaußenkanten der Trägerplatten zur Ausrichtung der Bildaufnahmeelemente des erfindungsgemäßen Stereokamerasystems sowie im Rahmen des erfindungsgemäßen Verfahrens dienen.

Weitere Vorteile sowie optionale Ausgestaltungen gehen aus der Beschreibung und den Zeichnungen hervor. Ausführungsbeispiele sind in den Zeichnungen vereinfacht dargestellt und in der nachfolgenden Beschreibung näher erläutert.

Es zeigt
- Figur 1:: in vereinfachter Darstellung eine bevorzugte Ausgestaltung des erfindungsgemäßen Stereokamerasystems.
- Figur 2a bis 2d:: eine vorteilhafte Ausgestaltung von Kameramodulen, die im Rahmen des erfindungsgemäßen Verfahrens in einem Stereokamerasystem angeordnet werden können bzw. die im erfindungsgemäßen Stereokamerasystem angeordnet sein können.

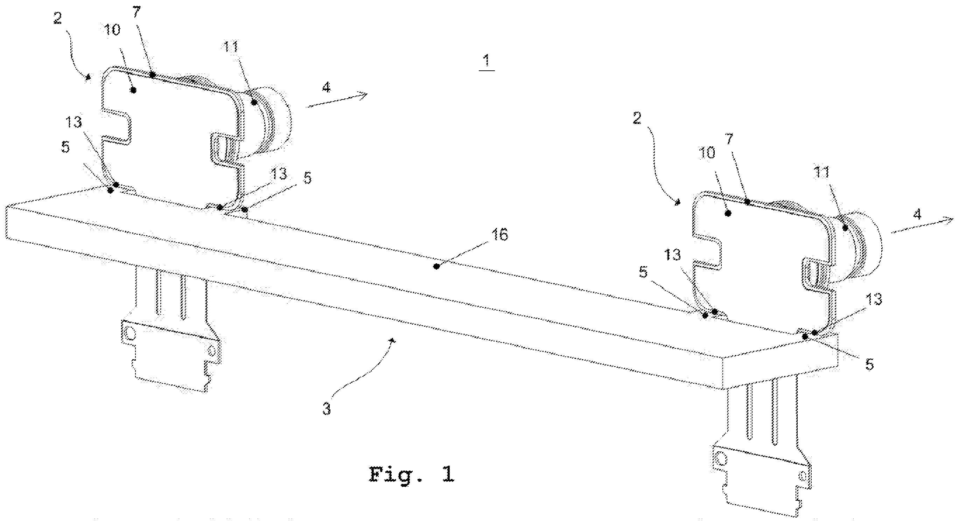

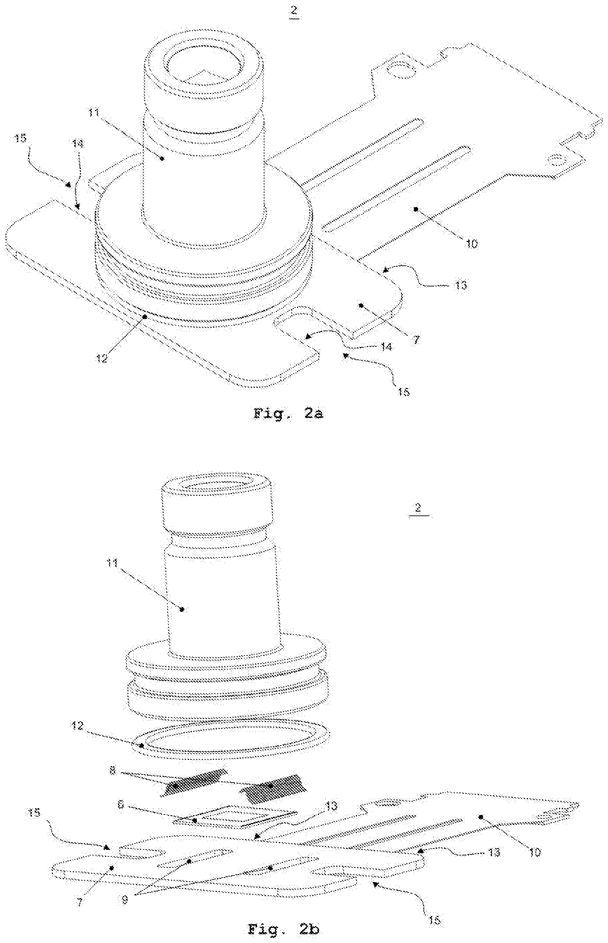

Fig. 1 zeigt in vereinfachter Darstellung eine bevorzugte Ausgestaltung des erfindungsgemäßen Stereokamerasystems 1. Das Stereokamerasystem 1 umfasst zwei Kameramodule 2, die entlang einer Hilfsvorrichtung 3, welche zur Ausrichtung 1 der Kameramodule 2 dient, lateral versetzt und mit gleicher Blickrichtung 4 nebeneinander angeordnet sind. Die Hilfsvorrichtung 3 wird dabei insbesondere zur Positionierung der Kameramodule 2 in dem Stereokamerasystem 1 angeordnet und nach der Positionierung der Kameramodule (2) wieder entfernt. Die optischen Achsen der Kameramodule 2 werden dabei bevorzugt parallel zueinander ausgerichtet. Unabhängig davon, wie die Hilfsvorrichtung 3 im Weiteren ausgebildet ist, umfasst die Hilfsvorrichtung 3 wenigstens eine Referenzkante 5. Bei dem Stereokamerasystem 1 kann es um ein in einem Fahrzeug anzuordnendes System handeln. Ein solches Stereokamerasystem 1 ist meist im Innenraum des Fahrzeugs hinter der Windschutzscheibe und mit Blickrichtung 4 durch die Windschutzscheibe hindurch angeordnet. Die Kameramodule 2 sind dabei in der Regel auf einer gemeinsamen Linie/Achse parallel zur Fahrzeugquerachse sowie lateral versetzt nebeneinander angeordnet und mit ihren optischen Achsen parallel zueinander in Richtung der vor dem Fahrzeug befindlichen Umgebung ausgerichtet. Die Kameramodule 2 des Stereokamerasystems 1 aus Fig. 1 sind dabei vorzugsweise gemäß den Figuren 2a bis 2d ausgebildet.

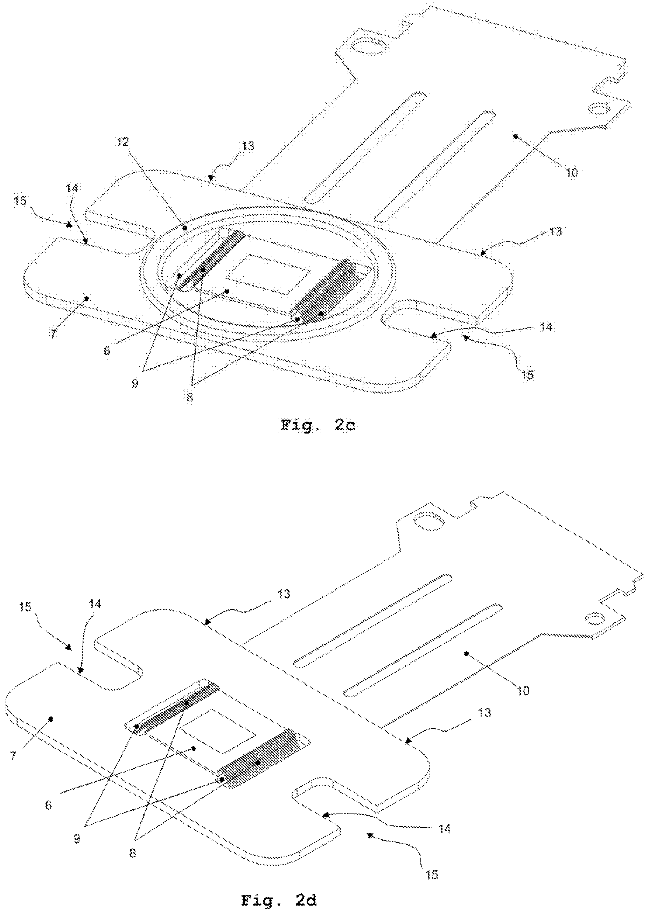

Fig. 2a zeigt ein Kameramodul 2 das in dem erfindungsgemäßen Stereokamerasystem 1 angeordnet sein kann bzw. das im Rahmen des erfindungsgemäßen Verfahrens in einem Stereokamerasystem 1 angeordnet werden kann. Fig. 2b zeigt das Kameramodul 2 aus Fig. 2a in einer Explosionsdarstellung. Die Figuren 2c und 2d zeigen das Kameramodul 2 gemäß den Figuren 2a und 2b, jedoch jeweils ohne Darstellung des Objektivs 11.
Das Kameramodul 2 umfasst gemäß den Figuren 2a bis 2d jeweils ein Bildaufnahmeelement 6, das auf einer Trägerplatte 7 angeordnet ist. Das Bildaufnahmeelement 6 ist vorzugsweise auf einer Vorderseite der Trägerplatte 7 angeordnet und mittels Drahtbonds 8, insbesondere durch Aussparungen 9 in der Trägerplatte 7 hindurch, mit einer Leiterplatte 10, die auf einer Rückseite der Trägerplatte 7 angeordnet ist, elektrisch kontaktiert. Bei dem Bildaufnahmeelement 6 handelt es sich bevorzugt um ein ungehäustes Bildaufnahmeelement, vorzugsweise um einen so genannten Bare-Die-Bildchip, das auf der Trägerplatte 7 aufgebracht ist. Die Trägerplatte 7 kann aus Metall gefertigt sein. Bei der Leiterplatte 10 kann es sich beispielsweise um eine flexible Leiterplatte handeln, welche Komponenten trägt, die zum Betreiben des Bildaufnahmeelements 6 erforderlich sind, und insbesondere eine Kontaktzone für die Verbindung mit einem Nullkraftstecker aufweist. Alternativ könnte eine FR4-Leiterplatte als Trägerplatte 7 eingesetzt werden. Eine solche Leiterplatte 10 hat bereits einen flexiblen Bereich mit Kontaktzonen. Demnach würde die zweiteilige Lösung, d.h. eine Trennung von Träger- und Leiterplatte, entfallen. Das Bildaufnahmeelement 6 könnte direkt auf die Leiterplatte aufgebracht werden. Die Bondverbindung 9 würde dann auf die gleiche Fläche erfolgen, auf die das Bildaufnahmeelement 6 aufgebracht ist. Demgegenüber hat die zweiteilige Ausgestaltung mit getrennter Trägerplatte 7 und Leiterplatte 10 den wesentlichen Vorteil, insbesondere wenn die Trägerplatte 7 als Metallplatte ausgebildet ist, dass eine sehr gute thermische Anbindung des Bildaufnahmeelements 6 vorliegt. Weiterhin kann ein Objektiv 11 des Kameramoduls 2 direkt auf der Trägerplatte 7 angeordnet werden, beispielsweise mittels einer Klebeverbindung 12. Wird ein Objektiv 11 aus Metall verwendet, so erfolgt in dem Fall eine Verklebung zwischen ähnlichen Materialien, was die Werkstoffauswahl für die Klebeverbindung 12 vereinfacht. Unabhängig davon, ob die Trägerplatte 7 als Metallplatte, Leiterplatte oder anderweitig ausgebildet ist, umfasst die Trägerplatte 7 erfindungsgemäß wenigstens eine Referenzaußenkante 13. Bei der Referenzaußenkante 13 könnte es sich insbesondere auch um eine Innenkante 14 innerhalb einer Aussparung bzw. innerhalb eines Ausschnittes 15 in der Trägerplatte 7 handeln. Grundsätzlich ist es neben der Verwendung von Referenzaußenkanten 13 alternativ oder zusätzlich andere spezielle Merkmale, wie z.B. Bohrungen in den Trägerplatten 7, zu verwenden, um die Trägerplatten 7 und damit die Kameramodule 2 zueinander auszurichten

Das Stereokamerasystem 1 aus Fig. 1 kann beispielsweise in einem Fahrzeug hinter der Windschutzscheibe mit Blickrichtung durch die Scheibe hindurch angeordnet werden. Insbesondere beim Einsatz eines Stereokamerasystems 1 in einem Fahrzeug sowie insbesondere bei einem Stereokamerasystem 1 gemäß Fig. 1, zum Beispiel zur Bestimmung von Entfernungsinformationen bzw. Tiefeninformationen, ist es erforderlich, dass die Kameramodule 2 bzw. die Bildaufnahmeelemente 6 des Stereokamerasystems 1 bezüglich ihres Abstands, ihrer Blickrichtung 4 sowie betreffend ihres Rollwinkels möglichst genau zueinander ausgerichtet sind. Hierzu kommt vorzugsweise das erfindungsgemäße Verfahren zum Einsatz, insbesondere zur Ausrichtung der Rollwinkel der Bildaufnahmeelemente 6 zueinander.

Gemäß dem erfindungsgemäßen Verfahren erfolgt die Ausrichtung der Kameramodule 2 bzw. der Bildaufnahmeelemente 6, insbesondere bezüglich des Rollwinkels, mittels der Schritte:
- Anordnung der Bildaufnahmeelemente 6 auf den Trägerplatten 7 der Kameramodule 2, wobei die Bildaufnahmeelemente 6 jeweils zu den Referenzaußenkanten 13 der Trägerplatten 7 ausgerichtet werden, insbesondere bezüglich ihres Rollwinkels;
- Anordnung der Kameramodule 2 innerhalb des Stereokamerasystems 1, wobei die Referenzaußenkanten 13 der Trägerplatten 7 gegen die Referenzkanten 5 der Tragvorrichtung 3 positioniert werden.
Ein wesentlicher Gedanke der Erfindung besteht darin, geeignete Maßnahmen zu ergreifen, durch die eine Verringerung der Toleranzen innerhalb der Kameramodule 2 des Stereokamerasystems 1 sowie eine Verringerung der Toleranzen bei der Ausrichtung der Kameramodule 2 zueinander erreicht wird, und damit eine Verringerung der gesamten Toleranzkette des Stereokamerasystems 1, insbesondere betreffen die Rollwinkelausrichtung der Bildaufnahmeelemente 6.
Eine erste vorgeschlagene Maßnahme besteht darin, ungehäuste Bildaufnahmeelemente 6 für das Stereokamerasystem 1 bzw. für die Kameramodule 2 zu verwenden. Dadurch entfällt die Rollwinkeltoleranz innerhalb der Bildaufnahmeelemente 6.
Eine weitere vorgeschlagene Maßnahme besteht darin, eine definierte Referenzaußenkante 13 an den Trägerplatten 7 der Kameramodule 2 vorzusehen. Dabei werden zum Einen, gemäß dem ersten Verfahrensschritt, die Bildaufnahmeelemente 6 bezüglich ihres Rollwinkels möglichst genau zu den Referenzaußenkanten 13 ausgerichtet, insbesondere mit ihren Pixelzeilen und/oder Pixelspalten parallel zu den Referenzaußenkanten 13. Zum Anderen werden, gemäß dem zweiten Verfahrensschritt, die Kameramodule 2 selbst mittels der Referenzaußenkanten 13 zueinander ausgerichtet. Die Ausrichtung der Kameramodule 2 erfolgt vorzugsweise durch Positionierung der Referenzaußenkanten 13 der Trägerplatten 7 der Kameramodule 2 gegen eine gemeinsame oder mehrere zueinander ausgerichtete Referenzkanten 5, die bevorzugt in einer Ebene liegen, d.h. die z.B. an einer gemeinsamen Referenzfläche 16 der Tragvorrichtung 3 des Stereokamerasystems 1 angeordnet sind.
Durch die oben beschrieben Maßnahmen kann die Toleranzkette des gesamten Stereokamerasystems 1, insbesondere die Toleranzkette betreffend die Rollwinkeltoleranz zwischen den Bildaufnahmeelementen 6 des Stereokamerasystems 1, deutlich reduziert bzw. verkürzt werden. Bei Verwendung sowohl von ungehäusten Bildaufnahmeelementen 6 sowie von Referenzaußenkanten 13, zur Ausrichtung der Bildaufnahmeelemente 6 auf den Trägerplatten 7 und zur Ausrichtung der Kameramodule 2 an Referenzkanten 5 zueinander, kann die Toleranzkette vorzugsweise auf lediglich zwei verbleibende Toleranzen reduziert werden:
- Rollwinkeltoleranz der Bildaufnahmeelemente 6 zu den Referenzaußenkanten 13.
- Toleranz in der Tragvorrichtung oder Hilfsvorrichtung zur Aufnahme der Kameramodule 2 im Stereokamerasystem 1.

### Bezeichnungsliste

- 1: Stereokamerasystem
- 2: Kameramodul
- 3: Hilfsvorrichtung
- 4: Blickrichtung
- 5: Referenzkante
- 6: Bildaufnahmeelement
- 7: Trägerplatte
- 8: Drahtbonds
- 9: Aussparung
- 10: Leiterplatte
- 11: Objektiv
- 12: Klebeverbindung
- 13: Referenzaußenkante
- 14: Innenkante
- 15: Ausschnitt
- 16: Referenzfläche

## Patentansprüche

1. **Verfahren** zur Ausrichtung wenigstens zweier Bildaufnahmeelemente (6) zweier Kameramodule (2) eines Stereokamerasystems (1), insbesondere bezüglich ihres Rollwinkels zueinander, **umfassend die Schritte:**
- Anordnung der Bildaufnahmeelemente (6) auf Trägerplatten (7) der Kameramodule (2), wobei die Bildaufnahmeelemente (6) jeweils zu wenigstens einer Referenzaußenkante (13) der Trägerplatten (7) ausgerichtet werden, insbesondere bezüglich ihres Rollwinkels;
- Anordnung der Kameramodule (2) innerhalb des Stereokamerasystems (1), wobei die Referenzaußenkanten (13) der Trägerplatten (7) gegen eine gemeinsame Referenzkante oder gegen mehrere zueinander ausgerichtete Referenzkanten (5) positioniert werden,
wobei bei der Ausrichtung der Bildaufnahmeelemente (6) jeweils zu wenigstens einer Referenzaußenkante (13) der Trägerplatten (7),
die Bildaufnahmeelemente (6) jeweils gegen eine oder mehrere Anschlagskanten, mit denen die Trägerplatten (7) ausgebildet sind, positioniert werden,
und wobei die Positionierung der Bildaufnahmeelemente (6) gegen die eine oder mehrere Anschlagskanten der Trägerplatten (7) mittels eines oder mehrerer federnder Elemente erfolgt, mit welchen die Trägerplatten (7) ausgebildet sind und welche die Bildaufnahmeelemente (6) bei deren Anordnung auf der Trägerplatte (7) mit einer Federkraft gegen die Anschlagskanten beaufschlagen.

2. Verfahren nach Anspruch 1,
**dadurch gekennzeichnet, dass**
bei der Ausrichtung der Bildaufnahmeelement (6) jeweils zu wenigstens einer Referenzkante (13) der Trägerplatten (7),
die Bildaufnahmeelemente (6) jeweils gegen eine oder mehrere Anschlagskanten einer Hilfsvorrichtung positioniert werden, die zur Anordnung und Ausrichtung der Bildaufnahmeelemente (6) jeweils auf den Trägerplatten (7) angeordnet und nach der Anordnung und Ausrichtung der Bildaufnahmeelemente (6) wieder entfernt wird.

3. Verfahren nach einem der vorangegangenen Ansprüche,
**dadurch gekennzeichnet, dass**
bei der Anordnung der Bildaufnahmeelemente (6) auf den Trägerplatten (7),
die Bildaufnahmeelemente (6) als ungehäuste Bildaufnahmeelemente auf den Trägerplatten (7) angeordnet werden.

4. Verfahren nach einem der vorangegangenen Ansprüche,
**dadurch gekennzeichnet, dass**
die Bildaufnahmeelemente (6) auf einer Vorderseite der Trägerplatten (7) angeordnet werden und mittels Drahtbonds (8) durch Aussparungen (9) in den Trägerplatten (7) hindurch mit Leiterplatten (10) kontaktiert werden, die auf einer Rückseite der Trägerplatten (7) angeordnet sind.

5. Verfahren nach einem der Ansprüche 1 bis 3,
**dadurch gekennzeichnet, dass**
es sich bei den Trägerplatten (7) um Leiterplatten handelt und die Bildaufnahmeelemente (6) mittels Drahtbonds (8) mit den Trägerplatten (7) kontaktiert werden.

6. Verfahren nach einem der vorangegangenen Ansprüche,
**dadurch gekennzeichnet, dass**
bei der Anordnung der Kameramodule (2) innerhalb des Stereokamerasystems (1),
die Referenzaußenkanten (13) der Trägerplatten (7) gegen eine gemeinsame Referenzkante oder gegen mehrere zueinander ausgerichtete Referenzkanten (5) einer Tragvorrichtung positioniert werden,
die zur Aufnahme der Kameramodule (2) innerhalb des Stereokamerasystems (1) dient.

7. Verfahren nach einem der Ansprüche 1 bis 5,
**dadurch gekennzeichnet, dass**
bei der Anordnung der Kameramodule (2) innerhalb des Stereokamerasystems (1),
die Referenzaußenkanten (13) der Trägerplatten (7) gegen eine gemeinsame Referenzkante oder gegen mehrere zueinander ausgerichtete Referenzkanten einer Hilfsvorrichtung (3) positioniert werden,
die zur Positionierung der Kameramodule (2) in dem Stereokamerasystem (1) angeordnet und nach der Positionierung der Kameramodule (2) wieder entfernt wird.

8. Stereokamerasystem (1) umfassend wenigstens zwei Kameramodule (2), die jeweils mit einer Trägerplatte (7) und einem Bildaufnahmeelement (6) ausgebildet sind, wobei die Bildaufnahmeelemente (6) auf Trägerplatten (7) angeordnet sind und die Bildaufnahmeelemente (6) jeweils zu wenigstens einer Referenzaußenkante (13) der Trägerplatten (7) ausgerichtet sind, insbesondere bezüglich ihres Rollwinkels zueinander, und wobei
es sich bei den Bildaufnahmeelementen (6) um ungehäuste Bildaufnahmeelemente handelt und
die Kameramodule (2) innerhalb des Stereokamerasystems (1) angeordnet sind, wobei
die Trägerplatten (7) der Kameramodule (2) mit wenigstens einer Referenzaußenkante (13) ausgebildet sind, die gegen eine gemeinsame Referenzkante oder gegen mehrere zueinander ausgerichtete Referenzkanten (5) einer Tragvorrichtung positioniert sind,
wobei die Trägerplatten (7) der Kameramodule (2) jeweils mit einem oder mehreren Ausschnitten (15) ausgebildet sind und wenigstens eine Innenkante (14) innerhalb der Ausschnitte (15) als Referenzaußenkante der Trägerplatten (7) dient,
wobei die Trägerplatten (7) mit einer oder mehreren Anschlagskanten ausgebildet sind, gegen welche die Bildaufnahmeelemente (6) positioniert sind und
wobei die Trägerplatten (7) weiter mit einem oder mehreren federnden Elementen ausgebildet sind, welche die Bildaufnahmeelemente (6) gegen die Anschlagskanten mit einer Federkraft beaufschlagen.

9. Stereokamerasystem nach Anspruch 8,
**dadurch gekennzeichnet, dass**
die Trägerplatten (7) der Kameramodule (2) jeweils mit einer oder mehrerer Bohrungen ausgebildet sind, die als Referenzmerkmale der Trägerplatten (7) dienen.

## Claims

1. A **method** for aligning at least two image recording elements (6) of two camera modules (2) of a stereo camera system (1), particularly in relation to their roll angle with respect to one another, **comprising the steps** of:
- arranging the image recording elements (6) on support plates (7) of the camera modules (2), wherein the image recording elements (6) are each aligned with at least one reference outside edge (13) of the support plates (7), particularly in relation to their roll angle;
- arranging the camera modules (2) within the stereo camera system (1), wherein the reference outside edges (13) of the support plates (7) are positioned against a common reference edge or against multiple reference edges (5) aligned with respect to one another,
wherein when the image recording elements (6) are in each case aligned with at least one reference outside edge (13) of the support plates (7),
the image recording elements (6) are each positioned against one or more stop edges, with which the support plates (7) are configured,
and wherein the image recording elements (6) are positioned against the one or more stop edges of the support plates (7) by means of one or more resilient elements, with which the support plates (7) are configured and which apply a spring force to the image recording elements (6) against the stop edges when said image recording elements are arranged on the support plate (7).

2. The method according to Claim 1,
**characterized in that**
when the image recording element (6) is in each case aligned with at least one reference edge (13) of the support plates (7),
the image recording elements (6) are in each case positioned against one or more stop edges of an auxiliary device which is arranged in order to arrange and align the image recording elements (6) in each case on the support plates (7) and which is removed again after the image recording elements (6) have been arranged and aligned.

3. The method according to any one of the preceding claims,
**characterized in that**
when the image recording elements (6) are arranged on the support plates (7)
the image recording elements (6) are arranged as unhoused image recording elements on the support plates (7).

4. The method according to any one of the preceding claims,
**characterized in that**
the image recording elements (6) are arranged on a front side of the support plates (7) and are contacted by means of wire bonds (8) through recesses (9) in the support plates (7) to printed circuit boards (10) which are arranged on a back side of the support plates (7).

5. The method according to any one of Claims 1 to 3,
**characterized in that**
the support plates (7) are printed circuit boards and the image recording elements (6) are contacted by means of wire bonds (8) to the support plates (7).

6. The method according to any one of the preceding claims,
**characterized in that**
when the camera modules (2) are arranged within the stereo camera system (1),
the reference outside edges (13) of the support plates (7) are positioned against a common reference edge or against multiple reference edges (5), which are aligned with respect to one another, of a carrying device
which serves to receive the camera modules (2) within the stereo camera system (1).

7. The method according to any one of Claims 1 to 5,
**characterized in that**
when the camera modules (2) are arranged within the stereo camera system (1),
the reference outside edges (13) of the support plates (7) are positioned against a common reference edge or against multiple reference edges, which are aligned with respect to one another, of an auxiliary device (3)
which is arranged to position the camera modules (2) in the stereo camera system (1) and which is removed again after the camera modules (2) have been positioned.

8. A stereo camera system (1), comprising at least two camera modules (2) which are each configured with a support plate (7) and an image recording element (6), wherein the image recording elements (6) are arranged on support plates (7) and the image recording elements (6) are each aligned with at least one reference outside edge (13) of the support plates (7), particularly in relation to their roll angle with respect to one another, and wherein
the image recording elements (6) are unhoused image recording elements, and the camera modules (2) are arranged within the stereo camera system (1),
wherein the support plates (7) of the camera modules (2) are configured with at least one reference outside edge (13), which are positioned against a common reference edge or against multiple reference edges (5), which are aligned with respect to one another, of a carrying device, wherein the support plates (7) of the camera modules (2) are each configured with one or more cut-outs (15) and at least one inner edge (14) within the cut-outs (15) serves as a reference outside edge of the support plates (7), wherein the support plates (7) are configured with one or more stop edges, against which the image recording elements (6) are positioned, and
wherein the support plates (7) are further configured with one or more resilient elements which apply a spring force to the image recording elements (6) against the stop edges.

9. The stereo camera system according to Claim 8,
**characterized in that**
the support plates (7) of the camera modules (2) are each configured with one or more bores which serve as reference features of the support plates (7).

## Revendications

1. **Procédé** d'alignement d'au moins deux éléments de prise de vue (6) de deux modules de caméra (2) d'un système de caméra stéréoscopique (1), en particulier par rapport à leur angle de rotation, **comprenant les étapes** :
- disposition des éléments de prise de vue (6) sur des plaques support (7) des modules de caméra (2), lesdits éléments de prise de vue (6) étant alignés sur au moins un bord de référence extérieur (13) des plaques support (7), en particulier par rapport à leur angle de rotation ;
- disposition des modules de caméra (2) à l'intérieur du système de caméra stéréoscopique (1), les bords de référence extérieurs (13) des plaques support (7) étant positionnés contre un bord de référence commun ou contre plusieurs bords de référence (5) alignés entre eux,
les éléments de prise de vue (6) étant, lors de l'alignement desdits éléments de prise de vue (6) sur au moins un bord de référence extérieur (13) des plaques support (7), positionnés chacun contre un ou plusieurs bords de butée avec lesquels sont formées les plaques support (7),
et le positionnement des éléments de prise de vue (6) contre le ou les bords de butée des plaques support (7) étant effectué au moyen d'un ou de plusieurs éléments élastiques avec lesquels sont formées les plaques support (7) et qui, lors de leur disposition sur la plaque support (7), contraignent les éléments de prise de vue (6) contre les bords de butée avec une force élastique.

2. Procédé selon la revendication 1,
**caractérisé**
**en ce que** lors de l'alignement de chaque élément de prise de vue (6) sur au moins un bord de référence (13) des plaques support (7),
les éléments de prise de vue (6) sont positionnés chacun contre un ou plusieurs bords de butée d'un dispositif auxiliaire, lequel est disposé sur les plaques support (7) pour l'agencement et l'alignement des éléments de prise de vue (6), et retiré après l'agencement et l'alignement des éléments de prise de vue (6).

3. Procédé selon l'une quelconque des revendications précédentes,
**caractérisé**
**en ce que** lors de la disposition des éléments de prise de vue (6) sur les plaques support (7), les éléments de prise de vue (6) sont disposés comme éléments de prise de vue dépourvus de boîtier sur les plaques support (7).

4. Procédé selon l'une quelconque des revendications précédentes,
**caractérisé**
**en ce que** les éléments de prise de vue (6) sont disposés sur une face avant des plaques support (7) et mis en contact avec des cartes de circuit (10) par des fils soudés (8) au travers d'évidements (9) dans les plaques support (7), les cartes de circuit étant disposées sur une face arrière des plaques support (7).

5. Procédé selon l'une des revendications 1 à 3,
**caractérisé**
**en ce que** les plaques support (7) sont des cartes de circuit, et les éléments de prise de vue (6) sont mis en contact avec les plaques support (7) par des fils soudés (8).

6. Procédé selon l'une quelconque des revendications précédentes,
**caractérisé**
**en ce que** lors de la disposition des modules de caméra (2) à l'intérieur du système de caméra stéréoscopique (1),
les bords de référence extérieurs (13) des plaques support (7) sont positionnés contre un bord de référence commun ou contre plusieurs bords de référence (5) alignés entre eux d'un dispositif de support
servant à la réception des modules de caméra (2) à l'intérieur du système de caméra stéréoscopique (1).

7. Procédé selon l'une des revendications 1 à 5,
**caractérisé**
**en ce que** lors de la disposition des modules de caméra (2) à l'intérieur du système de caméra stéréoscopique (1),
les bords de référence extérieurs (13) des plaques support (7) sont positionnés contre un bord de référence commun ou contre plusieurs bords de référence alignés entre eux d'un dispositif auxiliaire (3),
lequel est disposé dans le système de caméra stéréoscopique (1) pour positionnement des modules de caméra (2) et en est retiré après positionnement des modules de caméra (2).

8. Système de caméra stéréoscopique (1) comprenant au moins deux modules de caméra (2), formés chacun avec une plaque support (7) et un élément de prise de vue (6), les éléments de prise de vue (6) étant disposés sur des plaques support (7) et les éléments de prise de vue (6) étant alignés chacun sur au moins un bord de référence extérieur (13) des plaques support (7), en particulier par rapport à leur angle de rotation,
les éléments de prise de vue (6) étant des éléments de prise de vue dépourvus de boîtier et
les modules de caméra (2) étant disposés à l'intérieur du système de caméra stéréoscopique (1),
les plaques support (7) des modules de caméra (2) étant formées avec au moins un bord de référence extérieur (13) positionné contre un bord de référence commun ou contre plusieurs bords de référence (5) alignés entre eux d'un dispositif de support,
les plaques support (7) des modules de caméra (2) étant formées chacune avec une ou plusieurs découpes (15) et au moins un bord intérieur (14) à l'intérieur de la découpe (15) servant de bord de référence extérieur des plaques support (7),
les plaques support (7) étant formées avec un ou plusieurs bords de butée, contre lesquels sont positionnés les éléments de prise de vue (6)
et les plaques support (7) étant en outre formées d'un ou de plusieurs éléments élastiques contraignant les éléments de prise de vue (6) contre les bords de butée avec une force élastique.

9. Système de caméra stéréoscopique selon la revendication 8,
**caractérisé**
**en ce que** les plaques support (7) des modules de caméra (2) sont formées chacune avec un ou plusieurs alésages servant de caractéristiques de référence des plaques support (7).
